# EUROPEAN PATENT SPECIFICATION

(11) **EP 3 407 549 B1**
(45) Date of publication and mention of the grant of the patent: **26.08.2020**
(21) Application number: 17741055.2
(22) Date of filing: 18.01.2017
(51) Int. Cl.: H04L 12/58

(54) **RESOURCE SHARING METHOD, TERMINAL AND STORAGE MEDIUM**
VERFAHREN ZUR GEMEINSAMEN NUTZUNG VON RESSOURCEN, ENDGERÄT UND SPEICHERMEDIUM
PROCÉDÉ DE PARTAGE DE RESSOURCES, TERMINAL ET SUPPORT DE STOCKAGE

(30) Priority: 21.01.2016 CN 201610042161
(43) Date of publication of application: 28.11.2018
(73) Proprietor: Tencent Technology (Shenzhen) Company Limited, Shenzhen, Guangdong 518057 (CN)
(72) Inventor: LAI, Wenhui, Shenzhen Guangdong 518057 (CN); LIN, Danni, Shenzhen Guangdong 518057 (CN); XIONG, Feng, Shenzhen Guangdong 518057 (CN); LIU, Lin, Shenzhen Guangdong 518057 (CN); ZHONG, Pengfei, Shenzhen Guangdong 518057 (CN); XIAO, Richeng, Shenzhen Guangdong 518057 (CN); XU, Lingfeng, Shenzhen Guangdong 518057 (CN); LIAO, Zengkang, Shenzhen Guangdong 518057 (CN); TANG, Cong, Shenzhen Guangdong 518057 (CN); HUANG, Ming, Shenzhen Guangdong 518057 (CN); LI, Moubang, Shenzhen Guangdong 518057 (CN); KUANG, Jianwei, Shenzhen Guangdong 518057 (CN); WANG, Junchao, Shenzhen Guangdong 518057 (CN); WANG, Song, Shenzhen Guangdong 518057 (CN); WU, Zurong, Shenzhen Guangdong 518057 (CN); TU, Qiang, Shenzhen Guangdong 518057 (CN); ZHAI, Wei, Shenzhen Guangdong 518057 (CN)
(74) Representative: V.O.
(86) International application number: PCT/CN2017/071595
(87) International publication number: WO 2017/125024

(56) References cited:
- WO-A1-2015/113458
- CN-A- 104 484 694
- CN-A- 105 096 157
- CN-A- 105 187 527
- CN-A- 105 591 885
- US-A1- 2015 088 848

## Description

### FIELD OF THE TECHNOLOGY

The present disclosure relates to the field of network technologies, and in particular, to a resource sharing method, a terminal, and a storage medium.

### BACKGROUND OF THE DISCLOSURE

A resource includes a virtual object and a physical object, and the virtual object, is for example, an account numeric value, points, or an electronic voucher. An owner of resource may share the resource by using a social network, and a user with permission can obtain the shared resource. Sharing the resource on the social network can increase interaction between users, so as to maintain an existing relationship chain and establish a new social networking relationship chain.

However, when the owner of the current resource shares the resource, content of generated resource sharing messages is the same, and is difficult to be identified. For example, when a virtual red packet is given, a resource sharing message is a red packet message, and the red packet message is displayed in a red packet format specified by an application program. Assuming that multiple users give virtual red packets, it is difficult to identify different red packet messages from the resource sharing message.

It is noted that US 2015/088848 A1 discloses an electronic system and method for facilitating sound media and electronic commerce by selectively utilizing one or more song clips. It is noted that WO 2015/113458 A1 discloses a method, device and system for distributing virtual items.

### SUMMARY

According to various embodiments of this application, a resource sharing method, a terminal, and a storage medium are provided.

A resource sharing method is defined in claim 1, a terminal is defined in claim 7 and storage media is defined in claim 13.

Details of one or more embodiments of this application are provided in the following accompanying drawings and descriptions. Other features, objectives, and advantages of the present invention are obvious in this specification, the accompanying drawings, and the claims.

### BRIEF DESCRIPTION OF THE DRAWINGS

To describe the technical solutions in the embodiments of the present invention or in the existing technologies more clearly, the following briefly describes the accompanying drawings required for describing the embodiments or the existing technologies. Apparently, the accompanying drawings in the following description show merely some embodiments of the present invention, and a person of ordinary skill in the art may still derive other drawings from these accompanying drawings without creative efforts.
FIG. 1 is a schematic diagram of an application environment of a resource sharing system according to an embodiment;
FIG. 2 is a schematic structural diagram of a terminal for implementing a resource sharing method according to an embodiment;
FIG. 3 is a schematic flowchart of a resource sharing method according to an embodiment;
FIG. 4 is a schematic flowchart of steps of self-configuring a resource sharing message image template according to an embodiment;
FIG. 5 is a schematic flowchart of steps of obtaining a resource according to an embodiment;
FIG. 6 is a schematic flowchart of a resource sharing method according to another embodiment;
FIG. 7 is a schematic diagram 1 of a session page according to an embodiment;
FIG. 8 is a schematic diagram 1 of a red packet image configuration page according to an embodiment;
FIG. 9 is a schematic diagram 2 of a red packet image configuration page according to an embodiment;
FIG. 10 is a schematic diagram 3 of a red packet image configuration page according to an embodiment;
FIG. 11 is a schematic diagram 4 of a red packet image configuration page according to an embodiment;
FIG. 12 is a schematic diagram 2 of a session page according to an embodiment;
FIG. 13 is a schematic diagram 3 of a session page according to an embodiment;
FIG. 14 is a schematic diagram 4 of a session page according to an embodiment;
FIG. 15 is a structural block diagram of a terminal according to an embodiment;
FIG. 16 is a structural block diagram of a terminal according to another embodiment;
FIG. 17 is a structural block diagram of a terminal according to still another embodiment; and
FIG. 18 is a structural block diagram of a terminal according to an embodiment.

### DESCRIPTION OF EMBODIMENTS

To make the objectives, technical solutions, and advantages of this application clearer, the following further describes this application in detail with reference to the accompanying drawings and the embodiments. It should be understood that the specific embodiments described herein are merely used to explain this application but are not intended to limit this application.

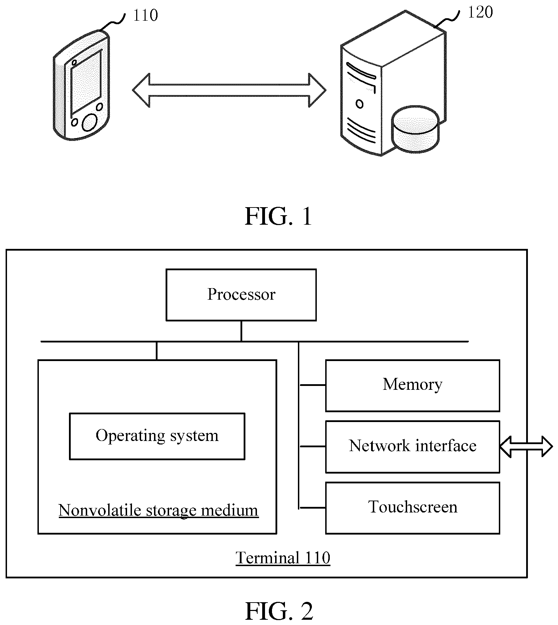

As shown in FIG. 1, in an embodiment, a resource sharing system is provided and includes a terminal 110 and a server 120. The terminal 110 includes a mobile terminal, a desktop computer, and the like, and the mobile terminal includes at least one of a mobile phone, a tablet computer, a smartwatch, a personal digital assistant (PDA), and an e-reader that can be connected to a network. The server 120 may be an independent physical server or may be a physical server cluster.

As shown in FIG. 2, in an embodiment, a terminal 110 for implementing a resource sharing method is provided and includes a processor, a nonvolatile storage medium, a memory, a network interface, and a touchscreen that are connected by using a bus. The processor has a computing function and a function of controlling operation of the terminal 110, and the processor is configured to perform the resource sharing method. The nonvolatile storage medium includes at least one of a magnetic storage medium, an optical storage medium, and a flash storage medium, and the network interface is configured to connect to the server 120. The touchscreen includes a touch layer and a display, and the display includes a liquid crystal display, a flexible display, and an e-ink display.

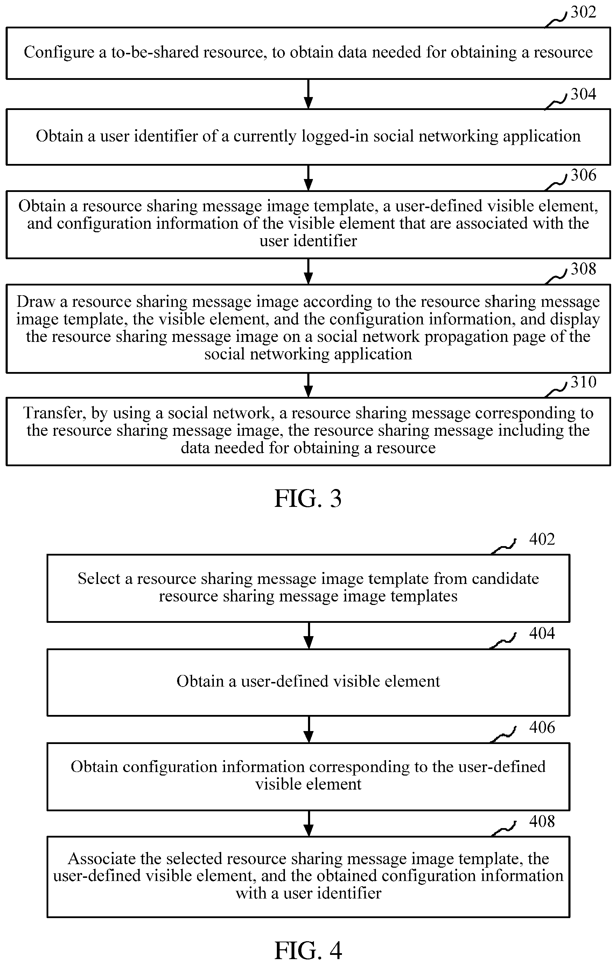

As shown in FIG. 3, in an embodiment, a resource sharing method is provided. This embodiment is described by using an example in which the method is applied to the terminal 110 shown in FIG. 1 and FIG. 2. The method specifically includes following steps:

Step 302: Configure a to-be-shared resource, to obtain data needed for obtaining a resource.

Specifically, the terminal may receive a resource sharing instruction, trigger to enter a resource configuration page according to the resource sharing instruction, and display configuration items of the to-be-shared resource on the resource configuration page, so as to obtain a configuration parameter of the to-be-shared resource according to configuration instructions for all the configuration items. The configuration items are for example, a resource type, a resource share, a resource allocation manner, and an attribute of a user capable of obtaining a resource that are of the to-be-shared resource. The configuration parameter is a specific value after the configuration items are configured. The resource type is for example, a currency red packet type, a physical red packet type, or a voucher red packet type. The resource share is for example, a currency amount, and a resource allocation manner such as even distribution or random distribution. The attribute of the user capable of obtaining the resource means that only friends or only group members can obtain the resource. Step 302 may be performed after step 306.

The data needed for obtaining a resource is data needed for obtaining the to-be-shared resource, and may include a resource identifier that is used to uniquely identify the to-be-shared resource; or may include a user identifier that is used to identify a user that initiates a resource sharing message; and may further include information about a validity period of the resource sharing message.

Step 304: Obtain a user identifier of a currently logged-in social networking application.

The social networking application is an application for social networking and interaction based on a social network. The social networking application generally has a contact searching function and an instant messaging function, and may further have a user generated content (UGC) sharing function and a UGC commenting function. The social networking application may be an instant messaging application, a social network sites (SNS) application, or the like. The user identifier, of the currently logged-in social networking application, obtained by the terminal may be an account entered by the user when the user logs in to the social networking application, or may be a unique character string generated according to the account.

Step 306: Obtain a resource sharing message image template, a user-defined visible element, and configuration information of the visible element that are associated with the user identifier.

Specifically, the terminal may perform query locally or query a server for the resource sharing message image template, the user-defined visible element, and the configuration information of the visible element that are associated with the user identifier. The resource sharing message image template, the user-defined visible element, and the configuration information of the visible element are used to draw a resource sharing message image, and may be collectively referred to as drawn data for ease of description.

In an embodiment, the terminal may determine whether locally there stores the drawn data, if locally there stores the drawn data, query the server whether a change occurs in the drawn data corresponding to the user identifier, in a time period from a time when the drawn data is obtained last time to a current time; and if no change occurs, directly locally obtain the drawn data corresponding to the user identifier; or if a change occurs or if locally there does not store the drawn data, query the server for the drawn data corresponding to the user identifier.

The resource is an object whose ownership can be obtained by using a network and includes at least one of a virtual object and a physical object. The virtual object includes at least one of an account value, a virtual image product, a virtual prepaid card, game equipment, and virtual currency. The physical object may be an object that can be arbitrarily owned by the user and that has an actual form, and is for example, an electronic product, a toy, an artifact, and a signed photo.

The resource sharing message image is an image that is displayed when a resource message is displayed, and the resource sharing message image template is a template-assisted resource sharing message image. The resource sharing message image template constrains overall attributes such as the overall shape and size of the resource sharing message image, and may further limit information about the shape, the size, and the location of an editing area that is used to accommodate the user-defined visible element.

The visible element refers to data that can be displayed and that is visible to human eyes, and is used to transfer information. The visible element may include a combination of one or more of a character, a picture, and an animated file. The format of the picture may use a JPEG format (a picture format, and an image compression standard that is specified by a Joint Photographic Experts Group), a PNG format (full name: Portable Network Graphic Format, meaning a portable network graphic format), or another custom image format. The image may include a static image and a dynamic image, and the dynamic image may use the GIF format (full name: Graphics Interchange Format). The animated file may use an SWF format (full name: shock wave flash, a FLASH animated file format provided by the Adobe company) or another custom animated file format.

The configuration information of the visible element is used to describe an attribute of the user-defined visible element, and a relationship between the user-defined visible element and the resource sharing message image template. The configuration information of the visible element may specifically include the size of the visible element, and the location of the visible element relative to the resource sharing message image template.

For example, if the visible element includes a character, the corresponding configuration information may include for example, a font, a word space, a word size, an alignment format, and a character color that are used to describe information about the attribute of the character, and may further include the location of the character in a corresponding resource sharing message image template. If the visible element includes an image, the corresponding configuration information may include a transparency degree and the location of the image in the resource sharing message image template.

Step 308: Draw a resource sharing message image according to the resource sharing message image template, the visible element, and the configuration information, and display the resource sharing message image on a social network propagation page of the social networking application.

Specifically, the terminal mixes the resource sharing message image template with the visible element according to the configuration information of the visible element, to draw the resource sharing message image. Further, the terminal may draw the visible element according to information that is used to describe the attribute of the visible element and that is in the configuration information, and mix the visible element with the resource sharing message image template according to information that is used to describe information about the location and that is in the configuration information.

The social network propagation page is a page that is of the social networking application and that can be accessed by a social friend and that can propagate a message, and is for example, a session page, a UGC sharing page, or a personal page that can be accessed by the public. The session page includes a one-to-one session page and a group session page.

Step 310: Transfer, by using a social network, a resource sharing message corresponding to the resource sharing message image, the resource sharing message including the data needed for obtaining a resource.

Specifically, the terminal may generate a resource sharing message corresponding to the resource sharing message image, and propagate the resource sharing message by using a message channel of the social network. A propagation object is related to the type of the social network propagation page. For example, if the social network propagation page is the one-to-one session page, the propagation object may be an identifier of another user who is in a session with a current user; or if the social network propagation page is the group session page, the propagation object may be all group members except the current user identifier in a current group.

The resource sharing message includes the data needed for obtaining a resource, and further includes the resource sharing message image, or data used to obtain the resource sharing message image. The data needed for obtaining a resource may include a resource identifier used to uniquely identify a resource that can be obtained; or may include a user identifier used to identify the user that initiates the resource sharing message; or may include a validity period of the resource sharing message. The data used to obtain the resource sharing message image may be the user identifier, or may be an access address of the resource sharing message image, or may be the resource sharing message image template, the user-defined visible element, and an access address of the configuration information of the visible element that are associated with the user identifier.

According to the resource sharing method, a user defines the visible element, and associates the resource sharing message image template, the visible element, and the configuration information of the visible element with the user identifier, so that when the user needs to share a resource, the user can obtain the resource sharing message image template, the visible element, and the configuration information according to the user identifier, so as to complete drawing of the resource sharing message image. The resource sharing message image is displayed on the social network propagation page of the social networking application, and the resource is shared by transferring the resource sharing message by using the social network. The resource sharing message image has the user-defined visible element, so that the resource sharing message can be conveniently and efficiently identified.

In an embodiment, the method further includes: playing custom audio when the resource sharing message image is displayed on the social network propagation page. The audio may be user-defined audio, or may be specifically real-time recorded audio, or may be audio selected locally, or may be audio selected from an audio set provided on the server.

In an embodiment, the method further includes: obtaining an identifier of the audio, and step S310 includes: generating a resource sharing message including the data needed for obtaining a resource and the identifier of the audio, where the resource sharing message corresponds to the transferred resource sharing message image; and transferring the resource sharing message by using the social network.

The identifier of the audio is used to uniquely identify corresponding audio. The identifier of the audio is used to obtain the audio and play the audio. The audio may be specifically music or a voice. The identifier of the audio may be a uniform resource locator (URL) of the audio, and the URL of the audio may be generated by the terminal after the terminal uploads the audio to the server.

In this embodiment, the resource sharing message propagated by using the social network can not only be used to share the resource, but also play particular audio at a receiving end, so as to increase an amount of transferred information.

As shown in FIG. 4, in an embodiment, the resource sharing method further includes steps of customizing a resource sharing message image template, and specifically includes the following steps:

Step 402: Select a resource sharing message image template from candidate resource sharing message image templates.

Specifically, the terminal may detect an operation on a resource sharing message image configuration control on the social network propagation page, so as to enter a resource sharing message image configuration page according to the detected operation. The detected operation may be manners such as touching and holding, tapping, sliding, and multi-touch.

The terminal pulls the candidate resource sharing message image template list from the server and displays the candidate resource sharing message image template list on the resource sharing message image configuration page, receives a user selection instruction, and selects the resource sharing message image template from the candidate resource sharing message image templates according to the user selection instruction.

Step 404: Obtain a user-defined visible element.

Specifically, the terminal may obtain a character entered by the user, or select a picture or an animated file according to a user selection instruction. In an embodiment, if the terminal does not detect an operation of defining a visible element by the user, the user obtains a default visible element of the selected resource sharing message image template, and uses the default visible element as the user-defined visible element.

In an embodiment, the terminal may display a preview image that is of the resource sharing message image and that is generated by adding the visible element to an editing area of the selected resource sharing message image template. In this way, the user can preview the resource sharing message image, and accurately learn a result of defining the visible element by the user.

Step 406: Obtain configuration information corresponding to the user-defined visible element.

Specifically, after receiving an instruction that is of determining the configuration that is triggered by the user, the terminal may obtain the configuration information corresponding to the user-defined visible element. The obtained configuration information may include configuration information input by the user and configuration information that is automatically calculated.

Step 408: Associate the selected resource sharing message image template, the user-defined visible element, and the obtained configuration information with a user identifier.

Specifically, the terminal may associate the selected resource sharing message image template, the user-defined visible element, and the obtained configuration information with a user identifier on the server. The terminal may transfer the user identifier, an identifier of the resource sharing message image template, the user-defined visible element, and the corresponding configuration information to the server, and the server associates the selected resource sharing message image template, the user-defined visible element, and the obtained configuration information with the user identifier.

In this embodiment, by means of a self-defined configuration, the user can freely select the resource sharing message image template from the candidate resource sharing message image templates as he intends, and can define the visible element corresponding to the selected resource sharing message image template. In this way, a probability that different users have a same resource sharing message image is further decreased, and identifiability of the resource sharing message is further enhanced.

In an embodiment, before step 404, the method further includes: obtaining a constraint condition corresponding to the selected resource sharing message image template; and step 404 includes obtaining the user-defined visible element under the constraint condition.

The constraint condition is a condition that the user-defined visible element should satisfy, may include a constraint on the attribute of the visible element, and may further include a constraint on the location of the visible element relative to the selected resource sharing message image template. For example, the constraint condition may be a constraint on the size, the quantity, the location, the color, the transparency degree, and the like of the visible element.

Specifically, the server pre-stores a constraint condition corresponding to each resource sharing message image template, and the terminal may obtain the constraint condition corresponding to the selected resource sharing message image template from the server after selecting the resource sharing message image template. The terminal may display a prompt of the constraint condition, to guide the user to input or select as quickly as possible, according to the constraint condition, the visible element meeting the constraint condition.

When obtaining the user-defined visible element under the constraint condition, the terminal may specifically determine whether the visible element on which the user-defining operation has been performed satisfies the constraint condition, and reject the user-defining operation if the visible element does not satisfy the constraint condition; or accept the user-defining operation if the visible element satisfies the constraint condition. The user-defining operation may be, for example, uploading the visible element, increasing the quantity of visible elements, modifying the size of the visible element, or moving the location of the visible element.

In an embodiment, the selected resource sharing message image template has the corresponding constraint condition, and the visible element is obtained under the constraint condition and is associated with the user identifier. In this way, an error that occurs during drawing of the resource sharing message image can be avoided, so as to avoid incorrect resource sharing.

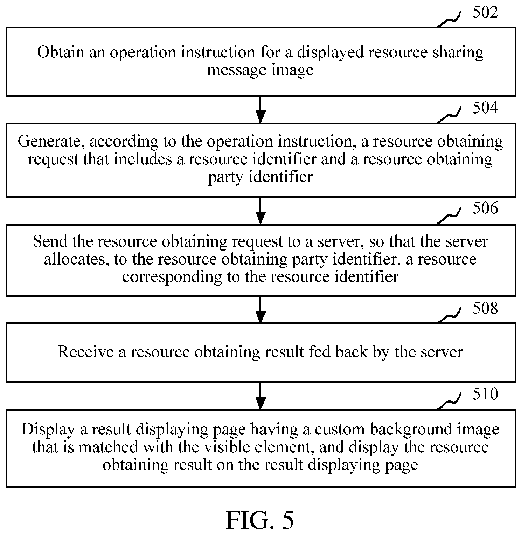

As shown in FIG. 5, in an embodiment, the resource sharing method further includes steps of obtaining a resource, and specifically includes the following steps:

Step 502: Obtain an operation instruction for a displayed resource sharing message image.

Specifically, the terminal that initiates resource sharing may obtain the operation instruction for the displayed the resource sharing message image; and a terminal that receives a resource sharing message may display the resource sharing message image according to the received resource sharing message, and obtain the operation instruction for the displayed resource sharing message image. The operation instruction may be triggered in manners such as touching and holding, tapping, sliding, and a multi-touch.

Step 504: Generate, according to the operation instruction, a resource obtaining request that includes a resource identifier and a resource obtaining party identifier.

Specifically, the terminal extracts the resource identifier from the resource sharing message according to the operation instruction, and generates the resource obtaining request that includes the resource identifier and the resource obtaining party identifier. The resource obtaining party identifier may be an identifier of a user that requests to obtain a resource, or may be a user identifier to which the terminal triggering the operation instruction logs in.

In an embodiment, the terminal may extract the resource identifier from the resource sharing message according to the operation instruction, and query the server whether the currently logged-in user identifier has permission to obtain a resource corresponding to the resource identifier; and generate, according to the operation instruction, the resource obtaining request including the resource identifier and the resource obtaining party identifier if the currently logged-in user identifier has the permission to obtain the resource corresponding to the resource identifier; or skip performing an action or prompting that the extraction fails if the currently logged-in user identifier does not have the permission to obtain the resource corresponding to the resource identifier.

In an embodiment, the method further includes: obtaining, according to the operation instruction, custom audio corresponding to the resource sharing message image, and playing the audio. In this embodiment, when the resource is obtained, the custom audio may be played, more amount of information may be transferred, and that the action of obtaining the resource occurs may be reminded.

Step 506: Send the resource obtaining request to a server, so that the server allocates, to the resource obtaining party identifier, a resource corresponding to the resource identifier.

Specifically, the terminal sends the resource obtaining request to the server, and the server obtains the resource identifier and the resource obtaining party identifier according to the resource obtaining request, so as to allocate, to the resource obtaining party identifier, the resource corresponding to the resource identifier. After receiving the resource obtaining request, the server determines whether there is a remaining share in the resource corresponding to the resource identifier, and if there is the remaining share, allocates, to the resource obtaining party identifier, a resource from the remaining resource, decreases a corresponding share, and feeds back, to the terminal, a resource obtaining result indicating that the resource is successfully obtained; or if there is no remaining share, directly feeds back, to the terminal, a resource obtaining result indicating that the resource is not successfully obtained.

When the server allocates a resource, if the resource is a resource that is to be allocated as per a value, such as a value of a virtual red packet or a prepaid card, when the server allocates a resource to the resource obtaining party identifier, the server may select a value from a preset value range randomly or according to a preset fixed value, and transfer the value into a value account corresponding to the resource obtaining party identifier. The value account includes a cash account or a voucher account, and the value account may be set on a bank server or a third-party payment server. If the resource is a resource that can be obtained after registration, such as a physical object, when the server allocates the resource to the resource obtaining party identifier, the server may record a correspondence between the resource and the resource obtaining party identifier to represent an ownership of a corresponding user on the resource, so that the resource is subsequently provisioned in other forms.

Step 508: Receive a resource obtaining result fed back by the server.

Specifically, the resource obtaining result includes a result indicating that the resource is successfully obtained and a result indicating that the resource is not successfully obtained. The terminal receives the resource obtaining result fed back by the server after the server allocates the resource. The result indicating that the resource is successfully obtained further includes description information of the obtained resource, for example, the value of accepted red packets.

Step 510: Display a result displaying page having a custom background image that matches the visible element, and display the resource obtaining result on the result displaying page.

Specifically, the terminal displays the result displaying page, the result displaying page has a custom background image, the custom background image matches the visible element, and the terminal displays the resource obtaining result on the result displaying page. The custom background image matches the visible element. Specifically, the custom background image may be an image obtained after the visible element is zoomed in or zoomed out, or may be an image obtained after the visible element is re-arranged. The custom background image may be fused with the result displaying page in a watermark manner.

In this embodiment, the resource sharing message image may trigger an action of obtaining a resource, and display the resource obtaining result on the result displaying page. The result displaying page has a custom background image that matches the visible element, so that more information can be transferred, and interaction manners between users are added.

In an embodiment, step 306 includes: querying a server for the resource sharing message image template, the user-defined visible element, and the configuration information of the visible element that are associated with the user identifier; perform step 308 if the resource sharing message image template, the user-defined visible element, and the configuration information of the visible element that are associated with the user identifier are found; and obtaining a resource sharing instruction, and performing, according to the resource sharing instruction, the step of displaying the resource sharing message image on a social network propagation page of the social networking application.

Specifically, before initiating resource sharing, for example, after logging in to the social networking application, or after completing customized configuration of the resource sharing message image template, the terminal may query the server for the resource sharing message image template, the user-defined visible element, and the configuration information of the visible element that are associated with the user identifier. If the resource sharing message image template, the user-defined visible element, and the configuration information of the visible element that are associated with the user identifier are found, the resource sharing message image is drawn according to drawn data found in a memory. If the resource sharing message image template, the user-defined visible element, and the configuration information of the visible element that are associated with the user identifier are not found, it indicates that the user does not customize the resource sharing message image template, and a default resource sharing message image on social networking application is used in subsequent resource sharing.

When the terminal detects an action that triggers to share a resource, for example, when a button for sharing a resource is pressed down, a corresponding resource sharing instruction is obtained. The terminal completes a resource configuration on the server according to the resource sharing instruction, and obtains data needed for obtaining a resource corresponding to the configured resource. The resource configuration is for example, a configuration of a resource type, a configuration of a resource share, and a configuration of a resource allocation manner.

In this embodiment, after the drawn data is found in the server, the resource sharing message image may be drawn in advance in the memory, so that when an operation of resource sharing is performed, the resource sharing message image that is drawn in advance in the memory may be immediately displayed on the social network propagation page. Drawing takes more time than displaying does. Therefore, by drawing the resource sharing message image in advance, the resource sharing efficiency is dramatically improved.

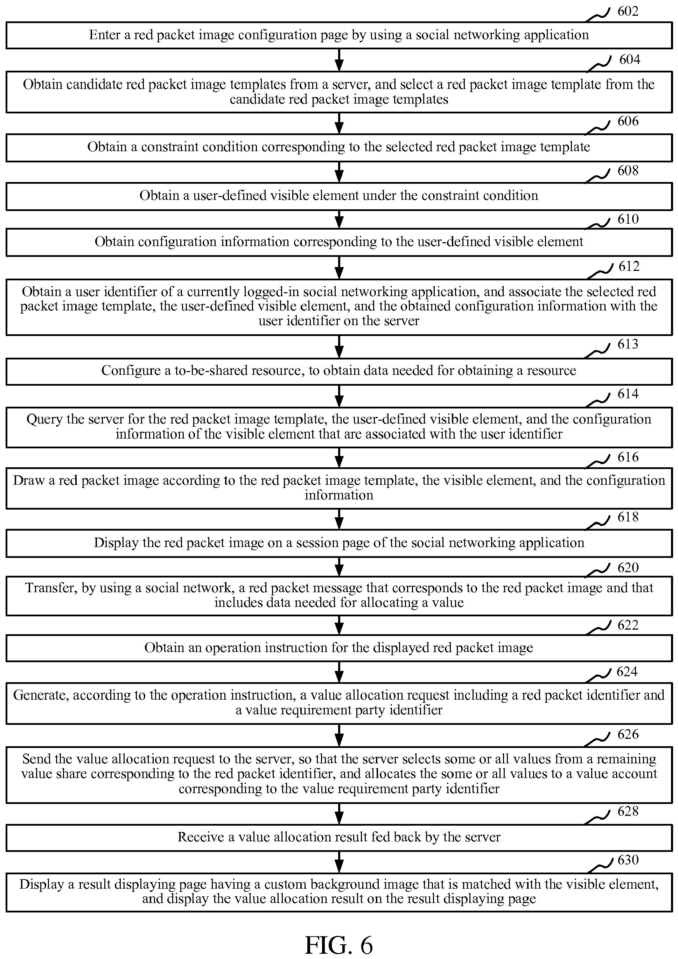

In an embodiment, a resource sharing message image template is a red packet image template, a resource sharing message image is a red packet image, a resource sharing message is a red packet message, a red packet message a special message, social network propagation page is a session page, and a resource sharing message image configuration page is a red packet image configuration page. A red packet is a gift having an attribute of a currency equivalent, and a virtual red packet is a red packet in an electronic format and is processed by a computer. As shown in FIG. 6, a resource sharing method specifically includes the following steps:

Step 602. Enter a red packet image configuration page by using a social networking application.

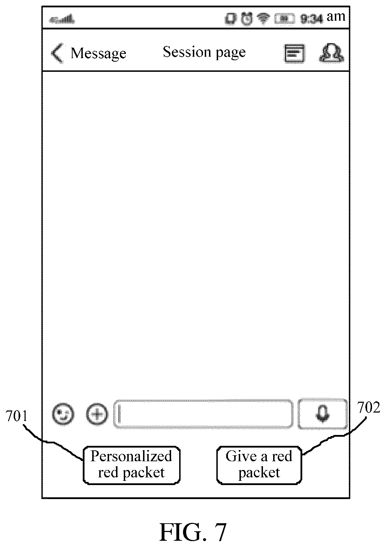

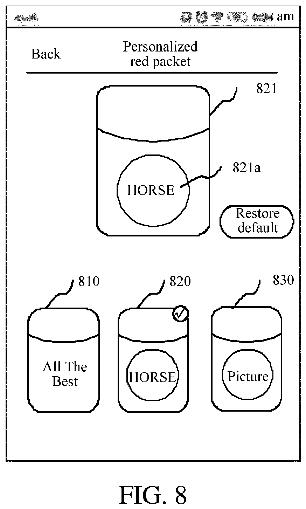

Referring to FIG. 7, after a user logs in to the social networking application, the user enters a session page, and taps a red packet image configuration control 701 in a toolbar of the session page to enter the red packet image configuration page shown in FIG. 8.

Step 604: Obtain candidate red packet image templates from a server, and select a red packet image template from the candidate red packet image templates.

For example, when entering the red packet image configuration page, the social networking application pulls a candidate red packet image template list from the server, and displays the candidate red packet image template list on the red packet image configuration page. The candidate red packet image templates 810, 820, and 830 are shown in FIG. 8. In FIG. 8, the user selects the candidate red packet image template 820, and displays an enlarged view of the candidate red packet image template 820 on the social networking application.

Step 606: Obtain a constraint condition corresponding to the selected red packet image template.

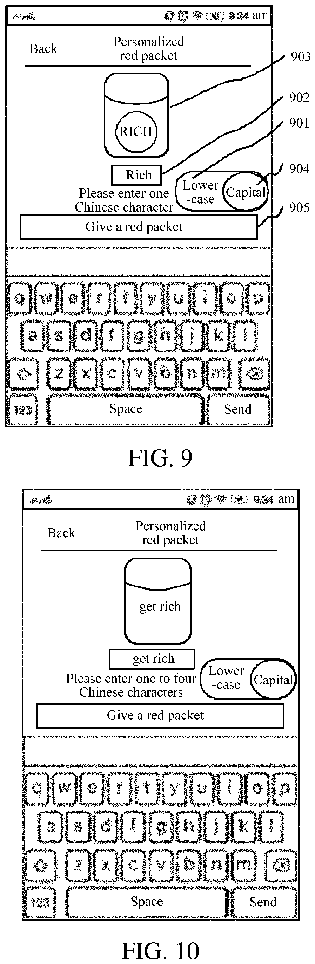

For example, the user taps an editing area 821a of a red packet image template 821 shown in FIG. 8, and enters a red packet image configuration page shown in FIG. 9. The social networking application obtains a constraint condition corresponding to the red packet image template 821, and the constraint condition includes that the visible element is an English word.

Step 608: Obtain a user-defined visible element under the constraint condition.

For example, referring to FIG. 9, a prompt 901 of the constraint condition may be displayed on the social networking application. The user enters an English word "Rich" in an input box 902, and a preview image 903 of a red packet image that is generated after the English word "Rich" is added to the editing area of the selected red packet image template is displayed on the social networking application. The social networking application may provide a switch 904 that may switch the visible element of the English word between capital letters and lower-case letters.

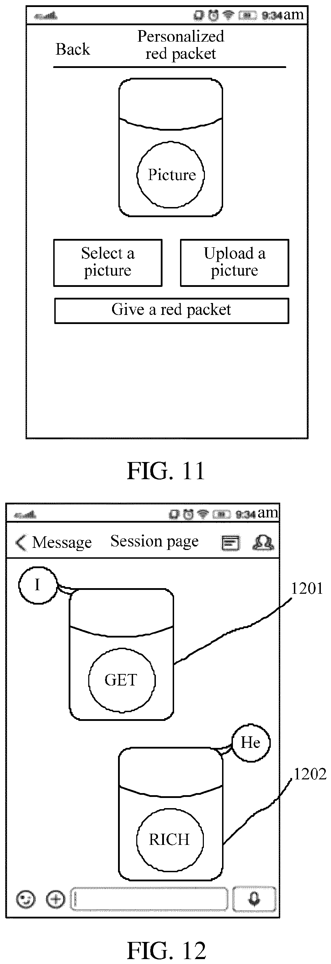

For another example, referring to FIG. 10, if the selected red packet image template is 810, a corresponding constraint condition includes that the visible element is four English letters at most. The user may enter one to four English letters under the constraint condition, and the social networking application may adaptively adjust a word size of the English letters according to different quantities of the English letters. For another example, referring to FIG. 11, if the selected red packet image template is 830, a corresponding constraint condition includes that the visible element is a image format, and the size of the visible elements does not exceed a preset value.

Step 610: Obtain configuration information corresponding to the user-defined visible element.

Step 612: Obtain a user identifier of a currently logged-in social networking application, and associate the selected red packet image template, the user-defined visible element, and the obtained configuration information with the user identifier on the server.

Step 613: Configure a to-be-shared resource, to obtain data needed for obtaining a resource.

Step 614: Query the server for the red packet image template, the user-defined visible element, and the configuration information of the visible element that are associated with the user identifier.

For example, when the user taps a virtual red packet trigger control 702 on a session page shown in FIG. 7, the social networking application triggers to query the server for drawn data, or when the user taps a virtual red packet trigger control 905 on the red packet image configuration page, the social networking application triggers to query the server for the drawn data.

Step 616: Draw a red packet image according to the red packet image template, the visible element, and the configuration information.

Step 618: Display the red packet image on a session page of the social networking application.

Step 620: Transfer, by using a social network, a red packet message that corresponds to the red packet image and that includes data needed for allocating a value, where a resource sharing message includes the data needed for obtaining a resource.

For example, referring to FIG. 12, when displaying the red packet message sent by the user, the social networking application displays a red packet image 1201 of the red packet message, and transfers the red packet message to a session object (one or more) on the session page by using the social network. The session object can also send the red packet message. For example, after receiving a red packet message sent by the session object, the terminal displays the red packet image 1202 of the red packet message.

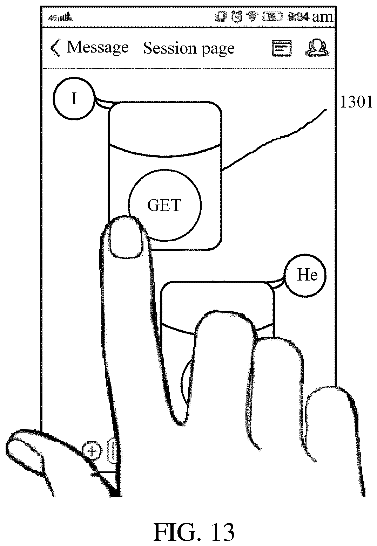

Step 622: Obtain an operation instruction for the displayed red packet image. For example, referring to FIG. 13, the user can tap a red packet image 1301 to trigger the operation instruction.

Step 624: Generate, according to the operation instruction, a value allocation request including a red packet identifier and a value requirement party identifier.

Step 626: Send the value allocation request to the server, so that the server selects some or all values from a remaining value share corresponding to the red packet identifier, and allocates the some or all values to a value account corresponding to the value requirement party identifier.

Step 628: Receive a value allocation result fed back by the server.

Step 630: Display a result displaying page having a custom background image that matches the visible element, and display the value allocation result on the result displaying page.

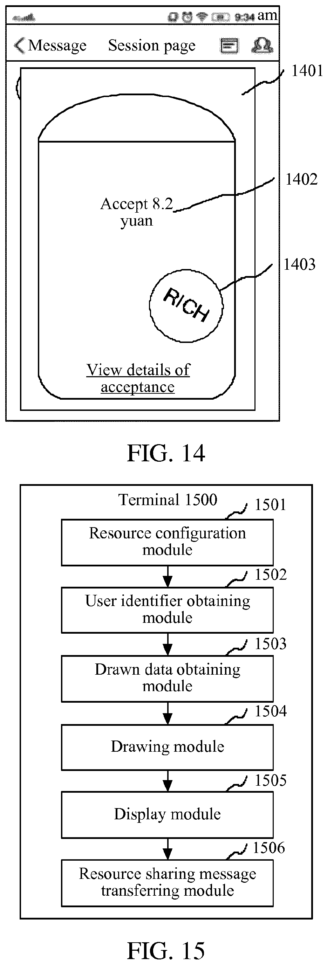

For example, referring to FIG. 14, the social networking application displays a result displaying page 1401 in a red packet format, and the result displaying page 1401 displays a value allocation result 1402, and a custom background image 1403 of the result displaying page 1401 matches the user-defined visible element.

In this embodiment, in the session page of the social networking application, a red packet message sent by each user may have desirable identifiability, and a particular red packet message can be efficiently identified in a multi-user session scenario. Moreover, the multiple users can interact with each other in the session page by mean of the red packet image, as shown in FIG. 12.

As shown in FIG. 15, this application further provides a terminal 1500, and an internal structure of the terminal may correspond to the structure shown in FIG. 2. All of or some of modules described below may be implemented by software, hardware, or a combination thereof. The terminal 1500 includes a resource configuration module 1501, a user identifier obtaining module 1502, a drawn data obtaining module 1503, a drawing module 1504, a display module 1505, and a resource sharing message transferring module 1506.

The resource configuration module 1501 is configured to configure a to-be-shared resource, to obtain data needed for obtaining a resource.

The user identifier obtaining module 1502 is configured to obtain a user identifier of a currently logged-in social networking application.

The drawn data obtaining module 1503 is configured to obtain a resource sharing message image template, a user-defined visible element, and configuration information of the visible element that are associated with the user identifier.

The drawing module 1504 is configured to draw a resource sharing message image according to the resource sharing message image template, the visible element, and the configuration information.

The display module 1505 is configured to display the resource sharing message image on a social network propagation page of the social networking application.

The resource sharing message transferring module 1506 is configured to transfer, by using a social network, a resource sharing message corresponding to the resource sharing message image, the resource sharing message including the data needed for obtaining a resource.

According to the terminal 1500, a user defines the visible element, and associates the resource sharing message image template, the visible element, and the configuration information of the visible element with the user identifier, so that when the user needs to share a resource, the user can obtain the resource sharing message image template, the visible element, and the configuration information according to the user identifier, so as to complete drawing of the resource sharing message image. The resource sharing message image is displayed on the social network propagation page of the social networking application, and the resource is shared by transferring the resource sharing message by using the social network. The resource sharing message image has the user-defined visible element, so that the resource sharing message can be conveniently and efficiently identified.

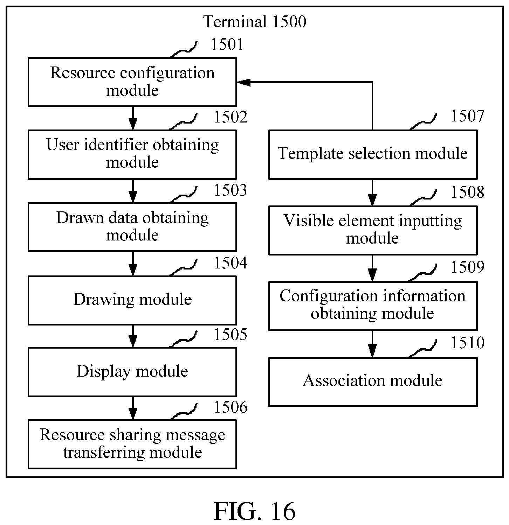

As shown in FIG. 16, in an embodiment, the terminal 1500 further includes a template selection module 1507, a visible element inputting module 1508, a configuration information obtaining module 1509, and an association module 1510.

The template selection module 1507 is configured to select the resource sharing message image template from candidate resource sharing message image templates.

The visible element inputting module 1508 is configured to obtain the user-defined visible element.

The configuration information obtaining module 1509 is configured to obtain the configuration information corresponding to the user-defined visible element.

The association module 1510 is configured to associate the selected resource sharing message image template, the user-defined visible element, and the obtained configuration information with the user identifier.

In this embodiment, by means of a custom configuration, the user can freely select the resource sharing message image template from the candidate resource sharing message image templates as he wishes, and can define the visible element corresponding to the selected resource sharing message image template. In this way, a probability that different users have a same resource sharing message image is further decreased, further enhancing identifiablity of the resource sharing message.

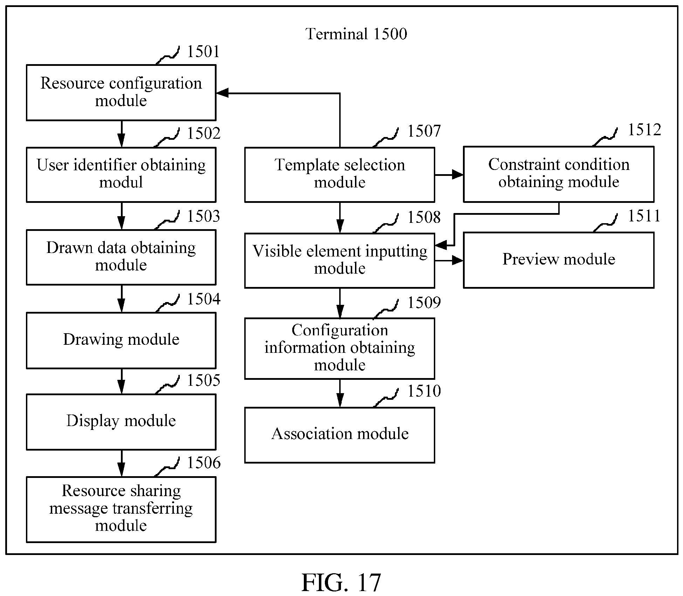

As shown in FIG. 17, in an embodiment, the terminal 1500 further includes a preview module 1511, configured to display a preview image that is of the resource sharing message image and that is generated by adding the visible element to an editing area of the selected resource sharing message image template.

In an embodiment, the terminal 1500 further includes a constraint condition obtaining module 1512, configured to obtain a constraint condition corresponding to the selected resource sharing message image template.

The visible element inputting module 1508 is configured to obtain the user-defined visible element under the constraint condition.

In an embodiment, the selected resource sharing message image template has the corresponding constraint condition, and the visible element is obtained under the constraint condition and is associated with the user identifier. In this way, an error that occurs during drawing of the resource sharing message image can be avoided, so as to avoid incorrect resource sharing.

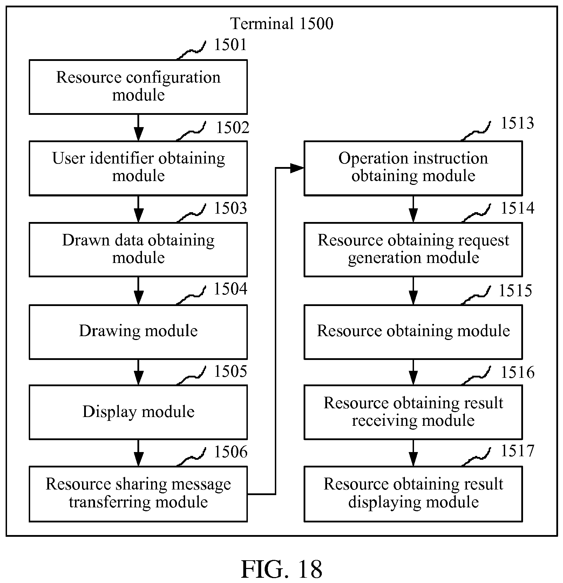

As shown in FIG. 18, in an embodiment, the terminal 1500 further includes an operation instruction obtaining module 1513, a resource obtaining request generation module 1514, a resource obtaining module 1515, a resource obtaining result receiving module 1516, and a resource obtaining result displaying module 1517.

The operation instruction obtaining module 1513 is configured to obtain an operation instruction for the displayed resource sharing message image.

The resource obtaining request generation module 1514 is configured to generate, according to the operation instruction, a resource obtaining request that includes a resource identifier and a resource obtaining party identifier.

The resource obtaining module 1515 is configured to send the resource obtaining request to a server, so that the server allocates, to the resource obtaining party identifier, a resource corresponding to the resource identifier.

The resource obtaining result receiving module 1516 is configured to receive a resource obtaining result fed back by the server.

The resource obtaining result displaying module 1517 is configured to: display a result displaying page having a custom background image that matches the visible element, and display the resource obtaining result on the result displaying page.

In this embodiment, the resource sharing message image may trigger an action of obtaining a resource, and display the resource obtaining result on the result displaying page. The result displaying page has a custom background image that matches the visible element, so that more information can be transferred, and interaction manners between users are added.

In an embodiment, the drawn data obtaining module 1503 is further configured to query a server for the resource sharing message image template, the user-defined visible element, and the configuration information of the visible element that are associated with the user identifier. If the resource sharing message image template, the user-defined visible element, and the configuration information of the visible element that are associated with the user identifier are found, the drawing module 1504 is notified.

The drawing module 1504 is further configured to draw a resource sharing message image in a memory according to the resource sharing message image template, the visible element, and the configuration information.

The drawing module 1504 is further configured to: obtain a resource sharing instruction, and display the resource sharing message image on the social network propagation page on the social networking application.

In this embodiment, after the drawn data is found in the server, the resource sharing message image may be drawn advance in the memory, so that when an operation of resource sharing is performed, the resource sharing message image that is drawn in advance in the memory may be immediately displayed on the social network propagation page. Drawing takes more time than displaying does. Therefore, by drawing the resource sharing message image in advance, resource sharing resource is dramatically improved.

In an embodiment, the resource sharing message is used to trigger an action of obtaining a resource; the resource includes at least one of a virtual object and a physical object; and the visible element includes at least one of a character and an image.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may be a nonvolatile storage medium such as a magnetic disk, an optical disc, a read-only memory (ROM), or a random access memory (RAM).

## Claims

1. A resource sharing method, comprising:
configuring (302) a to-be-shared resource by using a processor, to obtain data needed for obtaining a resource;
obtaining (304) a user identifier of a currently logged-in social networking application;
obtaining (306) a resource sharing message image template, a user-defined visible element, and configuration information of the visible element that are associated with the user identifier;
drawing (308) a resource sharing message image according to the resource sharing message image template, the visible element, and the configuration information, and displaying the resource sharing message image on a social network propagation page of the social networking application; and
transferring (310), by using a social network, a resource sharing message corresponding to the resource sharing message image, the resource sharing message comprising the data needed for obtaining a resource;
**characterized in that** the obtaining (306) a resource sharing message image template, a user-defined visible element, and configuration information of the visible element that are associated with the user identifier comprises:
querying (614) a server for the resource sharing message image template, the user-defined visible element, and the configuration information of the visible element that are associated with the user identifier, which comprises:
determining whether locally drawn data associated with the user identifier is stored, wherein the drawn data comprises the resource sharing message image template, the user-defined visible element, and the configuration information of the visible element that are associated with the user identifier;
if locally the drawn data is stored, querying the server whether a change occurred in the drawn data corresponding to the user identifier, in a time period from a time when the drawn data was obtained last time to a current time; and
if no change occurred, directly locally obtaining the drawn data corresponding to the user identifier; or
if a change occurred or if locally the drawn data is not stored, querying the server for the drawn data corresponding to the user identifier.

2. The method according to claim 1, further comprising:
selecting (402) the resource sharing message image template from candidate resource sharing message image templates;
obtaining (404) the user-defined visible element;
obtaining (406) the configuration information corresponding to the user-defined visible element; and
associating (408) the selected resource sharing message image template, the user-defined visible element, and the obtained configuration information with the user identifier.

3. The method according to claim 2, wherein before the obtaining (404) the user-defined visible element, the method further comprises:
obtaining (606) a constraint condition corresponding to the selected resource sharing message image template; and
the obtaining the user-defined visible element comprises:
obtaining (608) the user-defined visible element under the constraint condition.

4. The method according to claim 1, further comprising:
obtaining (502) an operation instruction for the displayed resource sharing message image;
generating (504), according to the operation instruction, a resource obtaining request that comprises a resource identifier and a resource obtaining party identifier;
sending (506) the resource obtaining request to a server, so that the server allocates, to the resource obtaining party identifier, a resource corresponding to the resource identifier;
receiving (508) a resource obtaining result fed back by the server; and
displaying (510) a result displaying page having a custom background image that matches the visible element, and displaying the resource obtaining result on the result displaying page.

5. The method according to claim 1, wherein the obtaining (306) a resource sharing message image template, a user-defined visible element, and configuration information of the visible element that are associated with the user identifier further comprises:
performing, in a memory, the step of drawing a resource sharing message image according to the resource sharing message image template, the visible element, and the configuration information, if the resource sharing message image template, the user-defined visible element, and the configuration information of the visible element that are associated with the user identifier are found; and
obtaining a resource sharing instruction, and performing, according to the resource sharing instruction, the step of displaying the resource sharing message image on a social network propagation page of the social networking application.

6. The method according to claim 1, wherein the resource sharing message is used to trigger an action of obtaining a resource; the resource comprises at least one of a virtual object and a physical object; and the visible element comprises at least one of a character and an image.

7. A terminal (110), comprising a memory and a processor, the memory storing a computer readable instruction, and the instruction, when executed by the processor, causing the processor to perform the following steps:
configuring a to-be-shared resource, to obtain data needed for obtaining a resource;
obtaining a user identifier of a currently logged-in social networking application;
obtaining a resource sharing message image template, a user-defined visible element, and configuration information of the visible element that are associated with the user identifier;
drawing a resource sharing message image according to the resource sharing message image template, the visible element, and the configuration information, and displaying the resource sharing message image on a social network propagation page of the social networking application; and
transferring, by using a social network, a resource sharing message corresponding to the resource sharing message image, the resource sharing message comprising the data needed for obtaining a resource;
**characterized in that** the obtaining a resource sharing message image template, a user-defined visible element, and configuration information of the visible element that are associated with the user identifier comprises:
querying a server for the resource sharing message image template, the user-defined visible element, and the configuration information of the visible element that are associated with the user identifier, which comprises:
determining whether locally drawn data associated with the user identifier is stored, wherein the drawn data comprises the resource sharing message image template, the user-defined visible element, and the configuration information of the visible element that are associated with the user identifier;
if locally the drawn data is stored, querying the server whether a change occurred in the drawn data corresponding to the user identifier, in a time period from a time when the drawn data was obtained last time to a current time; and
if no change occurred, directly locally obtaining the drawn data corresponding to the user identifier; or
if a change occurred or if locally the drawn data is not stored, querying the server for the drawn data corresponding to the user identifier.

8. The terminal according to claim 7, wherein the instruction, when executed by the processor, further causes the processor to perform the following steps:
selecting the resource sharing message image template from candidate resource sharing message image templates;
obtaining the user-defined visible element;
obtaining the configuration information corresponding to the user-defined visible element; and
associating the selected resource sharing message image template, the user-defined visible element, and the obtained configuration information with the user identifier.

9. The terminal according to claim 8, wherein the instruction, when executed by the processor, further causes the processor to perform the following steps before performing the obtaining the user-defined visible element:
obtaining a constraint condition corresponding to the selected resource sharing message image template; and
the obtaining the user-defined visible element comprises:
obtaining the user-defined visible element under the constraint condition.

10. The terminal according to claim 7, wherein the instruction, when executed by the processor, further causes the processor to perform the following steps:
obtaining an operation instruction for the displayed resource sharing message image;
generating, according to the operation instruction, a resource obtaining request that comprises a resource identifier and a resource obtaining party identifier;
sending the resource obtaining request to a server, so that the server allocates, to the resource obtaining party identifier, a resource corresponding to the resource identifier;
receiving a resource obtaining result fed back by the server; and
displaying a result displaying page having a custom background image that matches the visible element, and displaying the resource obtaining result on the result displaying page.

11. The terminal according to claim 7, wherein the obtaining a resource sharing message image template, a user-defined visible element, and configuration information of the visible element that are associated with the user identifier further comprises:
performing, in a memory, the step of drawing a resource sharing message image according to the resource sharing message image template, the visible element, and the configuration information, if the resource sharing message image template, the user-defined visible element, and the configuration information of the visible element that are associated with the user identifier are found; and
obtaining a resource sharing instruction, and performing, according to the resource sharing instruction, the step of displaying the resource sharing message image on a social network propagation page of the social networking application.

12. The terminal according to claim 7, wherein the resource sharing message is used to trigger an action of obtaining a resource; the resource comprises at least one of a virtual object and a physical object; and the visible element comprises at least one of a character and an image.

13. One or more computer readable nonvolatile storage media storing a computer readable instruction, the computer readable instruction, **characterized by** when executed by one or more processors, causing the one or more processors to perform the method in any of claims 1 to 6.

## Patentansprüche

1. Verfahren zur gemeinsamen Nutzung von Ressourcen, umfassend:
Konfigurieren (302) einer gemeinsam zu nutzenden Ressource unter Verwendung eines Prozessors, um Daten zu erhalten, die zum Erhalten von Ressourcen benötigt werden;
Erhalten (304) einer Benutzerkennung einer gegenwärtig angemeldeten Anwendung für soziale Netzwerke;
Erhalten (306) einer Vorlage des Bildes der Nachricht zur gemeinsamen Nutzung von Ressourcen, eines benutzerdefinierten sichtbaren Elements und von Konfigurationsinformationen des sichtbaren Elements, die der Benutzerkennung zugeordnet sind;
Zeichnen (308) eines Bildes der Nachricht zur gemeinsamen Nutzung von Ressourcen nach der Vorlage des Bildes der Nachricht zur gemeinsamen Nutzung von Ressourcen, des sichtbaren Elements und der Konfigurationsinformationen und Anzeigen des Bildes der Nachricht zur gemeinsamen Nutzung von Ressourcen auf einer Seite zur Verbreitung sozialer Netzwerke der Anwendung für soziale Netzwerke; und
Übertragen (310) unter Verwendung eines sozialen Netzwerks, einer Nachricht zur gemeinsamen Nutzung von Ressourcen, die dem Bild der Nachricht zur gemeinsamen Nutzung von Ressourcen entspricht, wobei die Nachricht zur gemeinsamen Nutzung von Ressourcen die Daten umfasst, die zum Erhalten einer Ressource benötigt werden;
**dadurch gekennzeichnet, dass** das Erhalten (306) einer Vorlage des Bildes der Nachricht zur gemeinsamen Nutzung von Ressourcen, eines benutzerdefinierten sichtbaren Elements und von
Konfigurationsinformationen des sichtbaren Elements, die der Benutzerkennung zugeordnet sind, umfasst:
Abfragen (614) eines Servers nach der Vorlage des Bildes der Nachricht zur gemeinsamen Nutzung von Ressourcen, des benutzerdefinierten sichtbaren Elements und den Konfigurationsinformationen des sichtbaren Elements, die der Benutzerkennung zugeordnet sind, das umfasst:
Bestimmen, ob lokal gezeichnete Daten, die der Benutzerkennung zugeordnet sind, gespeichert sind, wobei die gezeichneten Daten die Vorlage des Bildes der Nachricht zur gemeinsamen Nutzung von Ressourcen, das benutzerdefinierte sichtbare Element und die Konfigurationsinformationen des sichtbaren Elements umfassen, die der Benutzerkennung zugeordnet sind;
wenn die gezeichneten Daten lokal gespeichert sind, Abfragen des Servers, ob eine Änderung der gezeichneten Daten aufgetreten ist, die der Benutzerkennung entspricht, in einem Zeitraum von einer Zeit, zu der die gezeichneten Daten das letzte Mal erhalten wurden, bis zu einem aktuellen Zeitpunkt; und
wenn keine Änderung aufgetreten ist, direktes lokales Erhalten der gezeichneten Daten, die der Benutzerkennung entsprechen; oder
wenn eine Änderung aufgetreten ist oder wenn die gezeichneten Daten nicht lokal gespeichert sind, Abfragen des Servers nach den gezeichneten Daten, die der Benutzerkennung entsprechen.

2. Verfahren nach Anspruch 1, ferner umfassend:
Auswählen (402) der Vorlage des Bildes der Nachricht zur gemeinsamen Nutzung von Ressourcen aus den Kandidaten der Vorlagen des Bildes der Nachricht zur gemeinsamen Nutzung von Ressourcen;
Erhalten (404) des benutzerdefinierten sichtbaren Elements;
Erhalten (406) der Konfigurationsinformationen, die dem benutzerdefinierten sichtbaren Element entsprechen; und
Zuordnen (408) der ausgewählten Vorlage des Bildes der Nachricht zur gemeinsamen Nutzung von Ressourcen, des benutzerdefinierten sichtbaren Elements und der erhaltenen Konfigurationsinformationen der Benutzerkennung.

3. Verfahren nach Anspruch 2, wobei das Verfahren vor dem Erhalten (404) des benutzerdefinierten sichtbaren Elements ferner umfasst:
Erhalten (606) einer Einschränkungsbedingung, die der ausgewählten Vorlage des Bildes der Nachricht zur gemeinsamen Nutzung von Ressourcen entspricht; und
das Erhalten des benutzerdefinierten sichtbaren Elements umfasst:
Erhalten (608) des benutzerdefinierten sichtbaren Elements unter der Einschränkungsbedingung.

4. Verfahren nach Anspruch 1, ferner umfassend:
Erhalten (502) einer Bedienungsanleitung für das angezeigte Bild der Nachricht zur gemeinsamen Nutzung von Ressourcen;
Erzeugen (504) nach der Bedienungsanleitung einer Anforderung zum Erhalten von Ressourcen, die eine Ressourcenkennung und eine Kennung der Partei, die die Ressourcen erhält, umfasst;
Senden (506) der Anforderung zum Erhalten von Ressourcen an einen Server, so dass der Server eine Ressource, die der Ressourcenkennung entspricht, der Kennung der Partei, die die Ressourcen erhält, zuweist;
Empfangen (508) eines vom Server zurückgesendeten Ergebnisses des Erhaltens der Ressource; und
Anzeigen (510) einer das Ergebnis anzeigenden Seite mit einem angepassten Hintergrundbild, das dem sichtbaren Element entspricht, und Anzeigen des Ergebnisses des Erhaltens der Ressource auf der das Ergebnis anzeigenden Seite.

5. Verfahren nach Anspruch 1, wobei das Erhalten (306) einer Vorlage des Bildes der Nachricht zur gemeinsamen Nutzung von Ressourcen, eines benutzerdefinierten sichtbaren Elements und von Konfigurationsinformationen des sichtbaren Elements, die der Benutzerkennung zugeordnet sind, umfasst:
Durchführen des Schritts zum Zeichnen eines Bildes der Nachricht zur gemeinsamen Nutzung von Ressourcen nach der Vorlage des Bildes der Nachricht zur gemeinsamen Nutzung von Ressourcen, dem sichtbaren Element und den Konfigurationsinformationen in einem Speicher, wenn die Vorlage des Bildes der Nachricht zur gemeinsamen Nutzung von Ressourcen, das benutzerdefinierte sichtbare Element und die Konfigurationsinformationen des sichtbaren Elements, die der Benutzerkennung zugeordnet sind, gefunden werden; und
Erhalten einer Anweisung zur gemeinsamen Nutzung von Ressourcen und Durchführen des Schritts zum Anzeigen des Bildes der Nachricht zur gemeinsamen Nutzung von Ressourcen auf einer Seite zur Verbreitung sozialer Netzwerke der Anwendung für soziale Netzwerke nach der Anweisung zur gemeinsamen Nutzung von Ressourcen.

6. Verfahren nach Anspruch 1, wobei die Nachricht zur gemeinsamen Nutzung von Ressourcen verwendet wird, um eine Aktion zum Erhalten von Ressourcen auszulösen; die Ressource wenigstens ein virtuelles Objekt und ein physisches Objekt umfasst; und das sichtbare Element wenigstens ein Zeichen und ein Bild umfasst.

7. Terminal (110), umfassend einen Speicher und einen Prozessor, wobei der Speicher eine computerlesbare Anweisung speichert und die Anweisung, wenn sie vom Prozessor ausgeführt wird, bewirkt, dass der Prozessor die folgenden Schritte durchführt:
Konfigurieren einer gemeinsam zu nutzenden Ressource, um Daten zu erhalten, die zum Abrufen einer Ressource benötigt werden;
Erhalten einer Benutzerkennung einer aktuell angemeldeten Anwendung für soziale Netzwerke;
Erhalten einer Vorlage des Bildes der Nachricht zur gemeinsamen Nutzung von Ressourcen, eines benutzerdefinierten sichtbaren Elements und von Konfigurationsinformationen des sichtbaren Elements, die der Benutzerkennung zugeordnet sind;
Zeichnen eines Bildes der Nachricht zur gemeinsamen Nutzung von Ressourcen nach der Vorlage des Bildes der Nachricht zur gemeinsamen Nutzung von Ressourcen, des sichtbaren Elements und der Konfigurationsinformationen und Anzeigen des Bildes der Nachricht zur gemeinsamen Nutzung von Ressourcen auf einer Seite zur Verbreitung sozialer Netzwerke der Anwendung für soziale Netzwerke; und
Übertragen unter Verwendung eines sozialen Netzwerks, einer Nachricht zur gemeinsamen Nutzung von Ressourcen, die dem Bild der Nachricht zur gemeinsamen Nutzung von Ressourcen entspricht, wobei die Nachricht zur gemeinsamen Nutzung von Ressourcen die Daten umfasst, die zum Erhalten einer Ressource benötigt werden;
**dadurch gekennzeichnet, dass** das Erhalten einer Vorlage des Bildes der Nachricht zur gemeinsamen Nutzung von Ressourcen, eines benutzerdefinierten sichtbaren Elements und von
Konfigurationsinformationen des sichtbaren Elements, die der Benutzerkennung zugeordnet sind, umfasst:
Abfragen eines Servers nach der Vorlage des Bildes der Nachricht zur gemeinsamen Nutzung von Ressourcen, des benutzerdefinierten sichtbaren Elements und den Konfigurationsinformationen des sichtbaren Elements, die der Benutzerkennung zugeordnet sind, das umfasst:
Bestimmen, ob lokal gezeichnete Daten, die der Benutzerkennung zugeordnet sind, gespeichert sind, wobei die gezeichneten Daten die Vorlage des Bildes der Nachricht zur gemeinsamen Nutzung von Ressourcen, das benutzerdefinierte sichtbare Element und die Konfigurationsinformationen des sichtbaren Elements umfassen, die der Benutzerkennung zugeordnet sind;
wenn die gezeichneten Daten lokal gespeichert sind, Abfragen des Servers, ob eine Änderung der gezeichneten Daten aufgetreten ist, die der Benutzerkennung entspricht, in einem Zeitraum von einer Zeit, zu der die gezeichneten Daten das letzte Mal erhalten wurden, bis zu einem aktuellen Zeitpunkt; und
wenn keine Änderung aufgetreten ist, direktes lokales Erhalten der gezeichneten Daten, die der Benutzerkennung entsprechen; oder
wenn eine Änderung aufgetreten ist oder wenn die gezeichneten Daten nicht lokal gespeichert sind, Abfragen des Servers nach den gezeichneten Daten, die der Benutzerkennung entsprechen.

8. Terminal nach Anspruch 7, wobei die Anweisung, wenn sie vom Prozessor ausgeführt wird, bewirkt, dass der Prozessor die folgenden Schritte durchführt:
Auswählen der Vorlage des Bildes der Nachricht zur gemeinsamen Nutzung von Ressourcen aus den Kandidaten der Vorlagen des Bildes der Nachricht zur gemeinsamen Nutzung von Ressourcen;
Erhalten des benutzerdefinierten sichtbaren Elements;
Erhalten der Konfigurationsinformationen, die dem benutzerdefinierten sichtbaren Element entsprechen; und
Zuordnen der ausgewählten Vorlage des Bildes der Nachricht zur gemeinsamen Nutzung von Ressourcen, des benutzerdefinierten sichtbaren Elements und der erhaltenen Konfigurationsinformationen der Benutzerkennung.

9. Terminal nach Anspruch 8, wobei die Anweisung, wenn sie vom Prozessor ausgeführt wird, bewirkt, dass der Prozessor die folgenden Schritte durchführt, bevor das Erhalten des benutzerdefinierten sichtbaren Elements durchgeführt wird:
Erhalten einer Einschränkungsbedingung, die der ausgewählten Vorlage des Bildes der Nachricht zur gemeinsamen Nutzung von Ressourcen entspricht;
und
das Erhalten des benutzerdefinierten sichtbaren Elements umfasst:
Erhalten des benutzerdefinierten sichtbaren Elements unter der Einschränkungsbedingung.

10. Terminal nach Anspruch 7, wobei die Anweisung, wenn sie vom Prozessor ausgeführt wird, bewirkt, dass der Prozessor die folgenden Schritte durchführt:
Erhalten einer Bedienungsanleitung für das angezeigte Bild der Nachricht zur gemeinsamen Nutzung von Ressourcen;
Erzeugen nach der Bedienungsanleitung einer Anforderung zum Erhalten von Ressourcen, die eine Ressourcenkennung und eine Kennung der Partei, die die Ressourcen erhält, umfasst;
Senden der Anforderung zum Erhalten von Ressourcen an einen Server, so dass der Server eine Ressource, die der Ressourcenkennung entspricht, der Kennung der Partei, die die Ressourcen erhält, zuweist;
Empfangen eines vom Server zurückgesendeten Ergebnisses des Erhaltens der Ressource; und
Anzeigen einer das Ergebnis anzeigenden Seite mit einem angepassten Hintergrundbild, das dem sichtbaren Element entspricht, und Anzeigen des Ergebnisses des Erhaltens der Ressource auf der das Ergebnis anzeigenden Seite.

11. Terminal nach Anspruch 7, wobei das Erhalten einer Vorlage des Bildes der Nachricht zur gemeinsamen Nutzung von Ressourcen, eines benutzerdefinierten sichtbaren Elements und von Konfigurationsinformationen des sichtbaren Elements, die der Benutzerkennung zugeordnet sind, umfasst:
Durchführen des Schritts zum Zeichnen eines Bildes der Nachricht zur gemeinsamen Nutzung von Ressourcen nach der Vorlage des Bildes der Nachricht zur gemeinsamen Nutzung von Ressourcen, dem sichtbaren Element und den Konfigurationsinformationen in einem Speicher, wenn die Vorlage des Bildes der Nachricht zur gemeinsamen Nutzung von Ressourcen, das benutzerdefinierte sichtbare Element und die Konfigurationsinformationen des sichtbaren Elements, die der Benutzerkennung zugeordnet sind, gefunden werden; und
Erhalten einer Anweisung zur gemeinsamen Nutzung von Ressourcen und Durchführen des Schritts zum Anzeigen des Bildes der Nachricht zur gemeinsamen Nutzung von Ressourcen auf einer Seite zur Verbreitung sozialer Netzwerke der Anwendung für soziale Netzwerke nach der Anweisung zur gemeinsamen Nutzung von Ressourcen.

12. Terminal nach Anspruch 7, wobei die Nachricht zur gemeinsamen Nutzung von Ressourcen verwendet wird, um eine Aktion zum Erhalten von Ressourcen auszulösen; die Ressource wenigstens ein virtuelles Objekt und ein physisches Objekt umfasst; und das sichtbare Element wenigstens ein Zeichen und ein Bild umfasst.

13. Ein oder mehrere computerlesbare nichtflüchtige Speichermedien, die eine computerlesbare Anweisung speichern, wobei die computerlesbare Anweisung **dadurch gekennzeichnet ist, dass**, wenn sie von einem oder mehreren Prozessoren ausgeführt wird, bewirkt, dass der eine oder die mehreren Prozessoren das Verfahren in einem der Ansprüche 1 bis 6 durchführt.

## Revendications

1. Procédé de partage de ressource, comprenant :
la configuration (302) d'une ressource à partager, à l'aide d'un processeur, pour obtenir des données nécessaires à l'obtention d'une ressource ;
l'obtention (304) d'un identifiant d'utilisateur d'une application de réseautage social dans laquelle une session est actuellement ouverte ;
l'obtention (306) d'un modèle d'image de message de partage de ressource, d'un élément visible défini par l'utilisateur et d'informations de configuration de l'élément visible, qui sont associés à l'identifiant d'utilisateur ;
le dessin (308) d'une image de message de partage de ressource conformément au modèle d'image de message de partage de ressource, à l'élément visible et aux informations de configuration, et l'affichage de l'image de message de partage de ressource sur une page de propagation de réseau social de l'application de réseautage social ; et
le transfert (310), à l'aide d'un réseau social, d'un message de partage de ressource correspondant à l'image de message de partage de ressource, le message de partage de ressource comprenant les données nécessaires à l'obtention d'une ressource ;
**caractérisé en ce que** l'obtention (306) d'un modèle d'image de message de partage de ressource, d'un élément visible défini par l'utilisateur et d'informations de configuration de l'élément visible qui sont associés à l'identifiant d'utilisateur comprend :
l'interrogation (614) d'un serveur pour récupérer le modèle d'image de message de partage de ressource, l'élément visible défini par l'utilisateur et les informations de configuration de l'élément visible qui sont associés à l'identifiant d'utilisateur, ce qui comprend :
la détermination quant à savoir si des données dessinées associées à l'identifiant d'utilisateur sont stockées localement, les données dessinées comprenant le modèle d'image de message de partage de ressource, l'élément visible défini par l'utilisateur et les informations de configuration de l'élément visible qui sont associés à l'identifiant d'utilisateur ;
si les données dessinées sont stockées localement, l'interrogation du serveur quant à savoir si un changement est survenu dans les données dessinées correspondant à l'identifiant d'utilisateur dans une période de temps allant d'un instant auquel les données dessinées ont été obtenues la dernière fois à un instant actuel ; et
si aucun changement n'est survenu, l'obtention directe, localement, des données dessinées correspondant à l'identifiant d'utilisateur ; ou
si un changement est survenu ou si les données dessinées ne sont pas stockées localement, l'interrogation du serveur pour récupérer les données dessinées correspondant à l'identifiant d'utilisateur.

2. Procédé selon la revendication 1, comprenant en outre :
la sélection (402) du modèle d'image de message de partage de ressource parmi des modèles d'image de message de partage de ressource candidats ;
l'obtention (404) de l'élément visible défini par l'utilisateur ;
l'obtention (406) des informations de configuration correspondant à l'élément visible défini par l'utilisateur ; et
l'association (408) du modèle d'image de message de partage de ressource sélectionné, de l'élément visible défini par l'utilisateur et des informations de configuration obtenues à l'identifiant d'utilisateur.

3. Procédé selon la revendication 2, dans lequel avant l'obtention (404) de l'élément visible défini par l'utilisateur, le procédé comprend en outre :
l'obtention (606) d'une condition de contrainte correspondant au modèle d'image de message de partage de ressource sélectionné ; et
l'obtention de l'élément visible défini par l'utilisateur comprend :
l'obtention (608) de l'élément visible défini par l'utilisateur sous la condition de contrainte.

4. Procédé selon la revendication 1, comprenant en outre :
l'obtention (502) d'une instruction d'opération pour l'image de message de partage de ressource affichée ;
la génération (504), conformément à l'instruction d'opération, d'une demande d'obtention de ressource qui comprend un identifiant de ressource et un identifiant de partie obtentrice de ressource ;
l'envoi (506) de la demande d'obtention de ressource à un serveur, de manière que le serveur attribue, à l'identifiant de partie obtentrice de ressource, une ressource correspondant à l'identifiant de ressource ;
la réception (508) d'un résultat d'obtention de ressource renvoyé par le serveur ; et
l'affichage (510) d'une page d'affichage de résultat ayant une image de fond personnalisée qui concorde avec l'élément visible, et l'affichage du résultat d'obtention de ressource sur la page d'affichage de résultat.

5. Procédé selon la revendication 1, dans lequel l'obtention (306) d'un modèle d'image de message de partage de ressource, d'un élément visible défini par l'utilisateur et d'informations de configuration de l'élément visible qui sont associés à l'identifiant d'utilisateur comprend en outre :
la mise en œuvre, dans une mémoire, de l'étape de dessin d'une image de message de partage de ressource conformément au modèle d'image de message de partage de ressource, à l'élément visible et aux informations de configuration, si le modèle d'image de message de partage de ressource, l'élément visible défini par l'utilisateur et les informations de configuration de l'élément visible qui sont associés à l'identifiant d'utilisateur sont trouvés ; et
l'obtention d'une instruction de partage de ressource, et la mise en œuvre, conformément à l'instruction de partage de ressource, de l'étape d'affichage de l'image de message de partage de ressource sur une page de propagation de réseau social de l'application de réseautage social.

6. Procédé selon la revendication 1, dans lequel le message de partage de ressource est utilisé pour déclencher une action d'obtention d'une ressource ; la ressource comprend au moins un objet parmi un objet virtuel et un objet physique ; et l'élément visible comprend au moins un élément parmi un caractère et une image.

7. Terminal (110), comprenant une mémoire et un processeur, la mémoire stockant une instruction lisible par ordinateur, et l'instruction, lorsqu'elle est exécutée par le processeur, amenant le processeur à mettre en œuvre les étapes suivantes :
configuration d'une ressource à partager, pour obtenir des données nécessaires à l'obtention d'une ressource ;
obtention d'un identifiant d'utilisateur d'une application de réseautage social dans laquelle une session est actuellement ouverte ;
obtention d'un modèle d'image de message de partage de ressource, d'un élément visible défini par l'utilisateur et d'informations de configuration de l'élément visible, qui sont associés à l'identifiant d'utilisateur ;
dessin d'une image de message de partage de ressource conformément au modèle d'image de message de partage de ressource, à l'élément visible et aux informations de configuration, et affichage de l'image de message de partage de ressource sur une page de propagation de réseau social de l'application de réseautage social ; et
transfert, à l'aide d'un réseau social, d'un message de partage de ressource correspondant à l'image de message de partage de ressource, le message de partage de ressource comprenant les données nécessaires à l'obtention d'une ressource ;
**caractérisé en ce que** l'obtention d'un modèle d'image de message de partage de ressource, d'un élément visible défini par l'utilisateur et d'informations de configuration de l'élément visible qui sont associés à l'identifiant d'utilisateur comprend :
l'interrogation d'un serveur pour récupérer le modèle d'image de message de partage de ressource, l'élément visible défini par l'utilisateur et les informations de configuration de l'élément visible qui sont associés à l'identifiant d'utilisateur, ce qui comprend :
la détermination quant à savoir si des données dessinées associées à l'identifiant d'utilisateur sont stockées localement, les données dessinées comprenant le modèle d'image de message de partage de ressource, l'élément visible défini par l'utilisateur et les informations de configuration de l'élément visible qui sont associés à l'identifiant d'utilisateur ;
si les données dessinées sont stockées localement, l'interrogation du serveur quant à savoir si un changement est survenu dans les données dessinées correspondant à l'identifiant d'utilisateur dans une période de temps allant d'un instant auquel les données dessinées ont été obtenues la dernière fois à un instant actuel ; et
si aucun changement n'est survenu, l'obtention directe, localement, des données dessinées correspondant à l'identifiant d'utilisateur ; ou
si un changement est survenu ou si les données dessinées ne sont pas stockées localement, l'interrogation du serveur pour récupérer les données dessinées correspondant à l'identifiant d'utilisateur.

8. Terminal selon la revendication 7, dans lequel l'instruction, lorsqu'elle est exécutée par le processeur, amène en outre le processeur à mettre en œuvre les étapes suivantes :
sélection du modèle d'image de message de partage de ressource parmi des modèles d'image de message de partage de ressource candidats ;
obtention de l'élément visible défini par l'utilisateur ;
obtention des informations de configuration correspondant à l'élément visible défini par l'utilisateur ; et
association du modèle d'image de message de partage de ressource sélectionné, de l'élément visible défini par l'utilisateur et des informations de configuration obtenues à l'identifiant d'utilisateur.

9. Terminal selon la revendication 8, dans lequel l'instruction, lorsqu'elle est exécutée par le processeur, amène en outre le processeur à mettre en œuvre les étapes suivantes avant de mettre en œuvre l'obtention de l'élément visible défini par l'utilisateur :
obtention d'une condition de contrainte correspondant au modèle d'image de message de partage de ressource sélectionné ; et
l'obtention de l'élément visible défini par l'utilisateur comprend :
l'obtention de l'élément visible défini par l'utilisateur sous la condition de contrainte.

10. Terminal selon la revendication 7, dans lequel l'instruction, lorsqu'elle est exécutée par le processeur, amène en outre le processeur à mettre en œuvre les étapes suivantes :
obtention d'une instruction d'opération pour l'image de message de partage de ressource affichée ;
génération, conformément à l'instruction d'opération, d'une demande d'obtention de ressource qui comprend un identifiant de ressource et un identifiant de partie obtentrice de ressource ;
envoi de la demande d'obtention de ressource à un serveur, de manière que le serveur attribue, à l'identifiant de partie obtentrice de ressource, une ressource correspondant à l'identifiant de ressource ;
réception d'un résultat d'obtention de ressource renvoyé par le serveur ; et
affichage d'une page d'affichage de résultat ayant une image de fond personnalisée qui concorde avec l'élément visible, et affichage du résultat d'obtention de ressource sur la page d'affichage de résultat.

11. Terminal selon la revendication 7, dans lequel l'obtention d'un modèle d'image de message de partage de ressource, d'un élément visible défini par l'utilisateur et d'informations de configuration de l'élément visible qui sont associés à l'identifiant d'utilisateur comprend en outre :
la mise en œuvre, dans une mémoire, de l'étape de dessin d'une image de message de partage de ressource conformément au modèle d'image de message de partage de ressource, à l'élément visible et aux informations de configuration, si le modèle d'image de message de partage de ressource, l'élément visible défini par l'utilisateur et les informations de configuration de l'élément visible qui sont associés à l'identifiant d'utilisateur sont trouvés ; et
l'obtention d'une instruction de partage de ressource, et la mise en œuvre, conformément à l'instruction de partage de ressource, de l'étape d'affichage de l'image de message de partage de ressource sur une page de propagation de réseau social de l'application de réseautage social.

12. Terminal selon la revendication 7, dans lequel le message de partage de ressource est utilisé pour déclencher une action d'obtention d'une ressource ; la ressource comprend au moins un objet parmi un objet virtuel et un objet physique ; et l'élément visible comprend au moins un élément parmi un caractère et une image.

13. Support(s) de stockage non volatil lisible(s) par ordinateur stockant une instruction lisible par ordinateur, caractérisé(s) en ce que l'instruction lisible par ordinateur, lorsqu'elle est exécutée par un ou plusieurs processeurs, amène le ou les processeurs à mettre en œuvre le procédé selon l'une quelconque des revendications 1 à 6.
